(19) **Europäisches Patentamt / European Patent Office / Office européen des brevets**

(11) **EP 3 506 202 B1**

(12) **FASCICULE DE BREVET EUROPEEN**

(45) Date de publication et mention
de la délivrance du brevet:
**23.06.2021 Bulletin 2021/25**

(51) Int Cl.:
***G06T 7/292*** *(2017.01)*

(21) Numéro de dépôt: **18212481.8**

(22) Date de dépôt: **13.12.2018**

(54) **SYSTÈME ET PROCÉDÉ ADAPTATIFS DE SUIVI AUTOMATIQUE D'AU MOINS UNE CIBLE DANS AU MOINS UN FLUX VIDÉO**

ADAPTIVES SYSTEM UND VERFAHREN ZUR AUTOMATISCHEN NACHVERFOLGUNG MINDESTENS EINES ZIELS IN MINDESTENS EINEM VIDEOFLUSS

ADAPTIVE SYSTEM AND METHOD FOR AUTOMATICALLY TRACKING AT LEAST ONE TARGET IN AT LEAST ONE VIDEO STREAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.12.2017 FR 1763231**
**19.01.2018 FR 1850437**

(43) Date de publication de la demande:
**03.07.2019 Bulletin 2019/27**

(73) Titulaire: **BULL SAS**
**78340 Les Clayes Sous Bois (FR)**

(72) Inventeurs:
• **TROLAT, Florent**
**38140 Izeaux (FR)**
• **GUEGAN-MARAT, Sophie**
**38170 Seyssinet-Pariset (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
• **CARLOS ORRITE ET AL: "Adaptive tracking algorithms to improve the use of computing resources", IET COMPUTER VISION, vol. 7, no. 6, 1 décembre 2013 (2013-12-01), pages 415-424, XP055510200, Michael Faraday House, Six Hills Way, Stevenage, Herts. SG1 2AY, UK ISSN: 1751-9632, DOI: 10.1049/iet-cvi.2012.0016**
• **RONG LIU ET AL: "Online Determination of Track Loss Using Template Inverse Matching", THE EIGHTH INTERNATIONAL WORKSHOP ON VISUAL SURVEILLANCE, 1 octobre 2008 (2008-10-01), page 325656, XP055526572,**

**Description**

La présente invention concerne un système adaptatif de suivi automatique d'au moins une cible dans au moins un flux vidéo. Elle concerne également un procédé et un programme d'ordinateur correspondants.

Par « cible », on entend un objet ou un être vivant, humain ou animal, détectable et destiné à être suivi automatiquement dans le ou les flux vidéo à l'aide de méthodes connues pouvant être implémentées par micro programmation ou micro câblage dans le dispositif de suivi qui est lui-même un dispositif informatique ou électronique. En d'autres termes la cible est l'objet ou l'être vivant à situer en temps réel dans l'espace et le temps à partir d'une perception d'une scène fournie par une ou plusieurs caméras vidéo.

Les domaines d'application comportent la détection et le suivi automatique en temps réel d'une cible dans un flux vidéo, la détection et le suivi automatique d'une cible dans plusieurs flux vidéo fournis parallèlement par plusieurs caméras (fonctionnalité généralement connue sous le nom de « suivi multi-cibles temps-réel »), mais aussi la détection et le suivi automatique de plusieurs cibles dans plusieurs flux vidéo fournis parallèlement par plusieurs caméras (fonctionnalité généralement connue sous le nom de « suivi multi-cibles multi-caméras temps-réel»).

Le suivi multi-cibles multi-caméras en particulier est une opération complexe nécessitant la mise en œuvre d'algorithmes sophistiqués engendrant une quantité de calculs importante. Il nécessite l'utilisation conjointe et simultanée de plusieurs composants électroniques tels que des unités centrales de traitement CPU (de l'anglais « Central Processing Unit »), des puces électroniques spécialisées dans le décodage vidéo, des processeurs graphiques ou unités graphiques de traitement GPU (de l'anglais « Graphic Processing Unit»), etc. Par ailleurs, les algorithmes mis en œuvre dans la chaîne de traitement de suivi multi-cibles multi-caméras présentent un nombre important de paramètres de configuration influençant à la fois la qualité du suivi et la sollicitation des ressources matérielles.

Dans le domaine de la vidéosurveillance, il est en outre courant d'utiliser un très grand nombre de caméras : par exemple de quelques centaines de caméras dans des lieux publics fermés jusqu'à plusieurs milliers ou dizaines de milliers en extérieur. Une optimisation continue du compromis entre la qualité du suivi et la sollicitation des ressources matérielles devient alors indispensable, faute de quoi les coûts en calculs deviendraient rapidement prohibitifs.

Par ailleurs, le partage dynamique des ressources matérielles devient un enjeu majeur dans un contexte de polyvalence de ces dernières. Par exemple, à chaque instant la priorité peut être donnée au suivi d'une cible en particulier, quitte à réduire temporairement la qualité des autres suivis. Pour implémenter cette flexibilité il faut être capable d'adapter continument le suivi pour qu'il fonctionne selon une optimisation prédéterminée visant à réduire la sollicitation des ressources matérielles tout en conservant un certain niveau de qualité.

L'invention s'applique ainsi plus particulièrement à un système adaptatif de suivi automatique de cible dans au moins un flux vidéo, comportant :

- au moins un dispositif de suivi, recevant ledit au moins un flux vidéo et configurable dynamiquement, conçu pour la détection et le suivi automatique d'au moins une cible par analyse dudit au moins un flux vidéo,
- un calculateur d'au moins une valeur métrique de performance à partir d'un résultat de suivi de cible fourni par ledit au moins un dispositif de suivi,
- un correcteur d'au moins un paramètre de configuration dudit au moins un dispositif de suivi en fonction de ladite au moins une valeur métrique de performance, et
- au moins un configurateur dynamique dudit au moins un dispositif de suivi par application dudit au moins un paramètre de configuration corrigé.

Un tel système est par exemple envisagé dans l'article d'Igual et al, intitulé « Adaptive tracking algorithms to improve the use of computing resources », publié dans IET Computer Vison, volume 7, n° 6, pages 415 à 424 (2013). Il est conçu pour détecter des situations à risque en termes de suivi, c'est-à-dire des situations dans lesquelles le ou les dispositif(s) de suivi est ou sont susceptible(s) de commettre des erreurs de détection ou de suivi, pour adapter de manière automatique les capacités de calculs (i.e. la sollicitation des ressources matérielles) ou changer d'algorithme de suivi. A cet effet, il est capable de calculer au moins une valeur métrique de performance à partir d'un résultat de suivi de cible fourni par le ou les dispositif(s) de suivi et de s'en servir pour adapter dynamiquement ses paramètres de configuration.

Mais la détection des situations à risque n'est pas un problème simple à résoudre et la façon dont l'article d'Igual et al précité l'aborde n'est pas pleinement satisfaisante. Elle engendre pas mal d'incertitudes sur sa fiabilité.

Il peut ainsi être souhaité de prévoir un système adaptatif de suivi automatique de cible dans au moins un flux vidéo qui permette de s'affranchir d'au moins une partie des problèmes et contraintes précités.

Il est donc proposé un système adaptatif de suivi automatique de cible dans au moins un flux vidéo selon la revendication 1.

Ainsi, les situations à risque sont détectées de façon nettement plus fiable et l'optimisation des ressources matérielles qui en résulte compense largement le surcoût engendré par l'ajout du ou des dispositif(s) de suivi de référence.

De façon optionnelle, un système adaptatif de suivi automatique de cible selon l'invention peut en outre comporter au moins un dispositif de capture vidéo, relié en transmission de données audit au moins un dispositif de suivi et audit au moins un dispositif de suivi supplémentaire de référence, pour la fourniture respective dudit au moins un flux vidéo et de ladite au moins une portion dudit au moins un flux vidéo.

De façon optionnelle également, chaque dispositif de suivi est configurable à l'aide d'au moins l'un des paramètres de configuration de l'ensemble constitué de :

- un nombre d'images à traiter ou exploiter par seconde dans ledit au moins un flux vidéo,
- une résolution d'images, et
- un nombre maximal de cibles à détecter et suivre dans ledit au moins un flux vidéo.

De façon optionnelle également, le calculateur est plus précisément conçu pour calculer ladite au moins une valeur métrique de performance sur la base d'un nombre de cibles non identifiées ou perdues pour chaque dispositif de suivi, ce nombre étant calculé à partir de la comparaison, sur ladite au moins une portion de flux vidéo, du résultat de suivi de cible fourni par ledit au moins un dispositif de suivi et du résultat de suivi de référence fourni par ledit au moins un dispositif de suivi supplémentaire de référence.

De façon optionnelle également, le calculateur est plus précisément conçu pour calculer ladite au moins une valeur métrique de performance sur la base d'un nombre de cibles interchangées ou mal localisées pour chaque dispositif de suivi, ce nombre étant calculé à partir de la comparaison, sur ladite au moins une portion de flux vidéo, du résultat de suivi de cible fourni par ledit au moins un dispositif de suivi et du résultat de suivi de référence fourni par ledit au moins un dispositif de suivi supplémentaire de référence.

De façon optionnelle également, le correcteur est conçu pour procéder à une régulation d'une fréquence de consigne dudit au moins un dispositif de suivi par application au moins des règles suivantes :

- si le nombre de cibles non identifiées ou perdues ajouté au nombre de cibles interchangées ou mal localisées est supérieur à une consigne de qualité prédéterminée, par exemple augmentée d'une valeur de tolérance prédéterminée, alors on augmente la fréquence de consigne dudit au moins un dispositif de suivi, et
- si le nombre de cibles non identifiées ou perdues ajouté au nombre de cibles interchangées ou mal localisées est inférieur à la consigne de qualité prédéterminée, par exemple diminuée de la valeur de tolérance prédéterminée, alors on diminue la fréquence de consigne dudit au moins un dispositif de suivi.

De façon optionnelle également, un système adaptatif de suivi automatique de cible selon l'invention peut comporter plusieurs dispositifs de suivi, recevant simultanément respectivement plusieurs flux vidéo.

De façon optionnelle également, chaque dispositif de suivi est conçu pour la détection et le suivi automatique simultané de plusieurs cibles par analyse du flux vidéo qu'il reçoit.

Il est également proposé un procédé adaptatif de suivi automatique de cible dans au moins un flux vidéo selon la revendication 9.

Il est également proposé un programme d'ordinateur selon la revendication 10.

L'invention sera mieux comprise à l'aide de la description qui va suivre, donnée uniquement à titre d'exemple et faite en se référant aux dessins annexés dans lesquels :

- la figure 1 représente schématiquement la structure générale d'un système adaptatif de suivi automatique de cible dans au moins un flux vidéo, selon un mode de réalisation de l'invention,
- la figure 2 illustre les étapes successives d'un procédé de suivi automatique de cible mis en œuvre par le système de la figure 1,
- la figure 3 représente schématiquement un exemple de première architecture simplifiée pour le système de la figure 1, et
- la figure 4 représente schématiquement un exemple de deuxième architecture mutualisée et découplée pour le système de la figure 1.

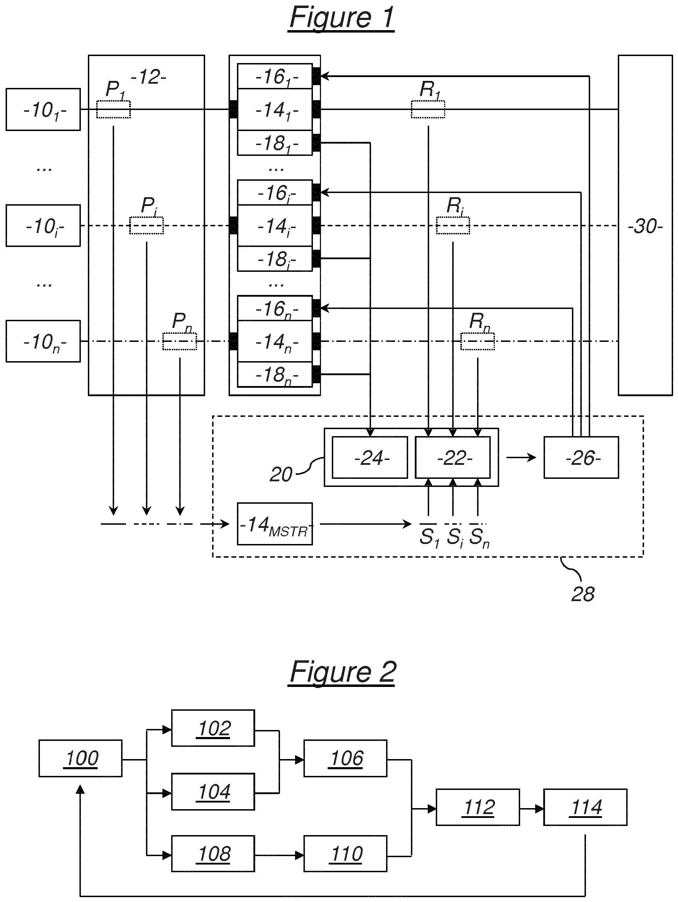

Le système adaptatif de suivi automatique de cible de la figure 1 comporte au moins un dispositif de capture vidéo pour la fourniture d'au moins un flux vidéo. Dans l'exemple non limitatif illustré, il en comporte n, plus précisément n caméras vidéo $10_1$, ..., $10_i$, ..., $10_n$ pour la fourniture de n flux vidéo. Chacune d'elles filme une scène et transmet le flux vidéo correspondant par connexion informatique.

Il comporte en outre un collecteur 12 des n flux vidéo pour leur transmission vers un étage primaire de dispositifs de suivi conçus pour la détection et le suivi automatique d'au moins une cible par analyse des flux vidéo qu'ils reçoivent respectivement.

Dans l'exemple illustré, l'étage primaire comporte :

- n dispositifs de suivi $14_1$, ..., $14_i$, ..., $14_n$ pour le traitement respectif des n flux vidéo issus des n caméras vidéo $10_1$, ..., $10_i$, ..., $10_n$, et transmis par le collecteur 12, et
- selon un premier aspect de la présente invention, un dispositif de suivi supplémentaire de référence $14_{MSTR}$ pour le traitement de portions respectives des n flux vidéo issus des n caméras vidéo $10_1$, ..., $10_i$, ..., $10_n$, ces portions étant sélectionnées et transmises par le collecteur 12.

Chacun des n dispositifs de suivi $14_1$, ..., $14_i$, ..., $14_n$ est par exemple apte à détecter et suivre simultanément en temps réel plusieurs cibles visibles dans le flux vidéo qu'il reçoit. De tels dispositifs, matériels ou logiciels, sont bien connus dans l'état de la technique et ne seront pas détaillés davantage. Ils sont configurables dynamiquement à l'aide d'un ou plusieurs paramètres permettant d'influer sur leur consommation en ressources matérielles, leurs performances et la qualité de leurs résultats en termes de suivi de cibles : par exemple un nombre d'images à traiter ou exploiter par seconde dans le flux vidéo, une résolution d'images, un nombre maximal de cibles à détecter et suivre dans le flux vidéo, etc. La configuration dynamique consiste à pouvoir modifier ces paramètres de configuration pendant leur exécution. Pour cela, ils sont respectivement associés à n configurateurs dynamiques $16_1$, ..., $16_i$, ..., $16_n$ qui sont matériellement conçus ou logiciellement programmés pour stocker, régler et appliquer dynamiquement ces paramètres de configuration.

De façon optionnelle, ils sont en outre respectivement associés à n dispositifs de mesure $18_1$, ..., $18_i$, ..., $18_n$ qui sont matériellement conçus ou logiciellement programmés pour mesurer une ou plusieurs valeurs représentatives d'une sollicitation ou exploitation de ressources matérielles par les n dispositifs de suivi $14_1$, ..., $14_i$, ..., $14_n$. Ces valeurs peuvent comporter une fréquence de fonctionnement des unités matérielles CPU et GPU sollicitées, un taux d'utilisation d'espace mémoire alloué, un débit d'entrée ou de sortie de données, un nombre d'images traitées ou exploitées par seconde dans le flux vidéo, un nombre de cœurs de calculs utilisés dans les unités matérielles CPU et GPU sollicitées, etc.

On remarquera que le nombre d'images traitées ou exploitées par seconde dans le flux vidéo est un paramètre qui peut à la fois être configuré (à l'aide des n configurateurs dynamiques $16_1$, ..., $16_i$, ..., $16_n$) et mesuré (à l'aide des n dispositifs de mesure $18_1$, ..., $18_i$, ..., $18_n$). En effet, ce n'est pas parce qu'un objectif consistant en un certain nombre d'images à traiter ou exploiter par seconde est fixé à l'aide de l'un des configurateurs $16_1$, ..., $16_i$, ..., $16_n$ qu'il est nécessairement atteint. Cet objectif peut être notamment temporairement entravé par des ressources matérielles insuffisantes et il est avantageux de pouvoir le mesurer.

Ainsi, en jouant dynamiquement sur les paramètres de configuration et en mesurant également régulièrement la sollicitation des ressources matérielles, il devient réellement possible d'optimiser automatiquement les traitements réalisés par les n dispositifs de suivi $14_1$, ..., $14_i$, ..., $14_n$ dans la limite des ressources disponibles.

Les portions de flux vidéo transmises au dispositif de suivi supplémentaire de référence $14_{MSTR}$ sont successivement sélectionnées par le collecteur 12 selon une règle algorithmique de sélection quelconque prédéterminée, par exemple selon un ordonnancement périodique des n caméras vidéo $10_1$, ..., $10_i$, ..., $10_n$. Dans l'exemple de la figure 1, n portions $P_1$, ..., $P_i$, ..., $P_n$ sont successivement sélectionnées et extraites des n flux vidéo fournis par les n caméras vidéo $10_1$, ..., $10_i$, ..., $10_n$. Elles sont avantageusement chacune de durée suffisamment courte pour ne pas contraindre le dispositif de suivi supplémentaire de référence $14_{MSTR}$ à un traitement en temps réel. Par exemple, chaque portion de flux vidéo peut présenter une durée inférieure à un dixième, voire un centième, du temps qui est laissé au dispositif de suivi supplémentaire de référence $14_{MSTR}$ pour réaliser son analyse. Ainsi, ce dernier peut disposer, contrairement aux n dispositifs de suivi $14_1$, ..., $14_i$, ..., $14_n$, de ressources matérielles plus performantes, déportées, ..., tant en mémoire qu'en capacités de calcul. Il peut donc être considéré que les traitements de détection et suivi réalisés par le dispositif de suivi supplémentaire de référence $14_{MSTR}$ sont optimaux, ou au moins de niveaux de qualité et de ressources supérieurs, en comparaison avec les n dispositifs de suivi $14_1$, ..., $14_i$, ..., $14_n$. C'est la raison pour laquelle les résultats fournis par ce dispositif de suivi supplémentaire de référence $14_{MSTR}$ peuvent être considérés comme constituant une référence, sans erreur de détection de cibles ni de suivi, à laquelle peuvent être comparés les résultats fournis par les n dispositifs de suivi $14_1$, ..., $14_i$, ..., $14_n$, selon le premier aspect de la présente invention.

Le système adaptatif de suivi automatique de cible de la figure 1 comporte en outre un calculateur de métriques 20 matériellement conçu ou logiciellement programmé pour le calcul d'au moins une valeur métrique de performance de chacun des dispositifs de suivi $14_1$, ..., $14_i$, .... $14_n$.

Selon le premier aspect de la présente invention le calculateur de métriques 20 comporte un premier module matériel ou logiciel 22 plus précisément conçu pour calculer une première valeur métrique de performance à partir d'une comparaison, sur chacune des n portions $P_1$, ...., $P_i$, ...., $P_n$ de flux vidéo, de résultats de suivi de cible(s) $R_1$, ..., $R_i$, ..., $R_n$ respectivement fournis par les dispositifs de suivi $14_1$, ..., $14_i$, ..., $14_n$ sur les n portions $P_1$, ..., $P_i$, ..., $P_n$ et de résultats de suivi de cible(s) $S_1$, ..., $S_i$, ..., $S_n$ successivement fournis par le dispositif de suivi supplémentaire de référence $14_{MSTR}$ sur ces mêmes n portions $P_1$, ..., $P_i$, ..., $P_n$. La première valeur métrique de performance peut être exprimée sous la forme d'un ratio et être corrélée à un nombre de cibles interchangées ou à un nombre de cibles non identifiées par chacun des n dispositifs de suivi $14_1$, ..., $14_i$, ..., $14_n$ lorsqu'on les compare au dispositif de suivi supplémentaire de référence $14_{MSTR}$.

De façon optionnelle, le calculateur de métriques 20 comporte un deuxième module matériel ou logiciel 24 plus précisément conçu pour calculer au moins une deuxième valeur métrique de performance à partir de chacune des valeurs représentatives de sollicitation de ressources matérielles fournies par les n dispositifs de mesure $18_1$, ..., $18_i$, ..., $18_n$. Conformément aux mesures données en exemple précédemment, il peut ainsi s'agir d'une fraction de fréquence de fonctionnement maximale des unités matérielles CPU et GPU sollicitées, d'un taux d'utilisation d'espace mémoire alloué, d'une fraction de débit d'entrée ou de sortie maximal de données, d'une métrique de résultat obtenu par rapport à un objectif fixé en termes de nombre d'images traitées ou exploitées par seconde, d'un taux d'utilisation des cœurs de calculs utilisés dans les unités matérielles CPU et GPU sollicitées par rapport à un nombre maximal alloué, pour chacun des n dispositifs de suivi $14_1$, ..., $14_i$, ..., $14_n$.

Le système adaptatif de suivi automatique de cible de la figure 1 comporte en outre un correcteur 26 matériellement conçu ou logiciellement programmé pour recalculer les paramètres de configuration des n dispositifs de suivi $14_1$, ..., $14_i$, ..., $14_n$ à partir des valeurs métriques fournies par le calculateur de métriques 20. En pratique, ce correcteur 26 peut disposer de fonctions ou systèmes d'équations linéaires ou non linéaires préétablis, d'un moteur de règles, d'un système expert, d'un système à réseaux neuronaux, de comparateurs, ou de tout autre outil d'intelligence artificielle utile à la mise à jour des paramètres de configuration de chacun des n dispositifs de suivi $14_1$, ..., $14_i$, ..., $14_n$. Il peut en particulier disposer d'un ensemble de règles ou lois qui doivent être observées, telles qu'une loi selon laquelle chaque dispositif de suivi $14_1$, ..., $14_i$, ..., $14_n$ doit traiter au moins cinq images par secondes, ou qu'une loi selon laquelle chaque dispositif de suivi $14_1$, ..., $14_i$, ..., $14_n$ ne doit pas échouer à détecter plus de 30% des cibles.

Il peut avoir une approche individuelle, en s'attachant au réglage individuel de chacun des n dispositifs de suivi $14_1$, .... $14_i$, ..., $14_n$, mais également une approche globale, en s'attachant à répartir équitablement les ressources matérielles globalement disponibles en fonction des besoins différents de chacun. Il fournit ses résultats aux n configurateurs dynamiques $16_1$, ..., $16_i$, ..., $16_n$.

Le dispositif de suivi supplémentaire de référence $14_{MSTR}$, le calculateur de métriques 20 et le correcteur 26 forment une plateforme matérielle ou logicielle d'optimisation 28 du système de la figure 1.

Les n résultats des n dispositifs de suivi $14_1$, ..., $14_i$, ..., $14_n$ sont fournis à un étage secondaire 30 du système adaptatif de suivi automatique de cible de la figure 1. Dans un mode de réalisation simple, cet étage secondaire 30 peut être un étage de sortie du système, mais il peut également s'agir d'un étage secondaire de traitement supplémentaire des flux vidéo.

Le fonctionnement du système détaillé précédemment va maintenant être décrit en référence à la figure 2.

Au cours d'une première étape 100, le collecteur 12 transmet les n flux vidéo fournis par les n caméras vidéo $10_1$, ..., $10_i$, ..., $10_n$ aux n dispositifs de suivi $14_1$, ..., $14_i$, ..., $14_n$ de l'étage primaire du système pour analyse. Au cours de cette même étape, le collecteur 12 transmet les n portions $P_1$, ..., $P_i$, ..., $P_n$ de flux vidéo successives au dispositif de suivi supplémentaire de référence $14_{MSTR}$ pour analyse également.

Au cours d'une étape suivante 102, chacun des n dispositifs de suivi $14_1$, ..., $14_i$, ..., $14_n$ prend connaissance de sa configuration courante à l'aide de son configurateur dynamique $16_1$, ..., $16_i$, ..., $16_n$, analyse le flux vidéo qui lui est transmis et fournit ses résultats à l'étage secondaire 30. Il fournit également ses résultats partiels $R_1$, ..., $R_i$, ..., $R_n$ obtenus sur les portions $P_1$, ..., $P_i$, ..., $P_n$ de flux vidéo au premier module 22 du calculateur de métriques 20.

Au cours d'une étape 104 exécutée parallèlement à l'étape 102, le dispositif de suivi supplémentaire de référence $14_{MSTR}$ analyse les n portions $P_1$, ..., $P_i$, ..., $P_n$ de flux vidéo successives qui lui sont transmises et fournit ses résultats $S_1$, ..., $S_i$, ..., $S_n$ au premier module 22 du calculateur de métriques 20.

Suite aux étapes 102 et 104, le premier module 22 du calculateur de métriques 20 calcule ses valeurs métriques précitées et les fournit au correcteur 26 au cours d'une étape 106.

Au cours d'une étape 108 exécutée parallèlement aux étapes 102 et 104, chacun des n dispositifs de mesure $18_1$, ..., $18_i$, ..., $18_n$ fournit ses valeurs mesurées au deuxième module 24 du calculateur de métriques 20.

Suite à l'étape 108, le deuxième module 24 du calculateur de métriques 20 calcule ses valeurs métriques précitées et les fournit au correcteur 26 au cours d'une étape 110.

Suite aux étapes 106 et 110, le correcteur 26 met à jour les paramètres de configuration des n dispositifs de suivi $14_1$, ..., $14_i$, ..., $14_n$ comme indiqué précédemment au cours d'une étape 112. Il transmet les valeurs mises à jour aux configurateurs dynamiques $16_1$, ..., $16_i$, ..., $16_n$.

Au cours d'une dernière étape 114, chaque configurateur dynamique $16_1$, ..., $16_i$, ..., $16_n$ agit respectivement sur chaque dispositif de suivi $14_1$, ..., $14_i$, ..., $14_n$ comme indiqué précédemment.

Les étapes 100 à 114 s'exécutent avantageusement en continu, pendant toute la durée de fonctionnement du système.

En ce qui concerne le calculateur de métriques 20, à titre d'exemple concret non limitatif :

-   son deuxième module 24 peut recevoir en entrée une liste de valeurs d'horodatage (dates, heures, ...), respectivement fournies par les n dispositifs de mesure $18_1$, ..., $18_i$, ..., $18_n$, auxquelles les n dispositifs de suivi $14_1$, ..., $14_i$, ..., $14_n$ démarrent et terminent leurs cycles de traitement pour une image donnée,

- son premier module 22 peut recevoir en entrée une liste de cibles détectées avec les coordonnées spatiales associées pour chacun des n dispositifs de suivi $14_1$, ..., $14_i$, ..., $14_n$ et une liste de référence correspondante de cibles détectées avec les coordonnées spatiales associées pour le dispositif de suivi supplémentaire de référence $14_{MSTR}$.

A partir de ces données d'entrée :

- le deuxième module 24 peut calculer une fréquence réelle de fonctionnement de chacun des n dispositifs de suivi $14_1$, ..., $14_i$, ..., $14_n$, c'est-à-dire le nombre d'images effectivement traitées ou exploitées par seconde dans le flux vidéo par chaque dispositif de suivi,
- le premier module 22 peut calculer un nombre de cibles perdues dans une scène du flux vidéo par chacun des n dispositifs de suivi $14_1$, ..., $14_i$, ..., $14_n$, en comparant la taille de la liste de référence précitée à chacune des tailles de listes de cibles détectées fournies par les n dispositifs de suivi $14_1$, ..., $14_i$, ..., $14_n$, et
- le premier module 22 peut calculer un nombre de cibles mal localisées dans une scène du flux vidéo par chacun des n dispositifs de suivi $14_1$, ...., $14_i$, ..., $14_n$, en comparant les coordonnées spatiales de la liste de référence précitée à chacune des coordonnées spatiales des listes de cibles détectées fournies par les n dispositifs de suivi $14_1$, ..., $14_i$, ..., $14_n$ : par exemple pour chaque dispositif de suivi, on compte toutes les cibles détectées à la fois par ce dispositif de suivi et par le dispositif de suivi supplémentaire de référence $14_{MSTR}$ dont les localisations diffèrent de plus d'un certain pourcentage (par exemple 5%) de la taille des images.

En ce qui concerne le correcteur 26, à titre d'exemple concret non limitatif, il peut recevoir en entrée les résultats des calculs précités réalisés par les premier et deuxième modules 22, 24 et une consigne de qualité, c'est-à-dire une qualité minimale à maintenir.

A partir de ces données d'entrée il peut, entre autres, procéder à une régulation de la fréquence de fonctionnement de chacun des n dispositifs de suivi $14_1$, ..., $14_i$, ..., $14_n$, appelée « fréquence de consigne » ou nombre d'images à traiter ou exploiter par seconde, par application de règles telles que les règles suivantes :

- si le nombre de cibles perdues ajouté au nombre de cibles mal localisées est supérieur à la consigne de qualité, par exemple augmentée d'une valeur de tolérance prédéterminée, alors il convient d'augmenter la fréquence de consigne du dispositif de suivi considéré, et éventuellement de revoir la répartition globale des ressources matérielles entre les n dispositifs de suivi $14_1$, ..., $14_i$, ..., $14_n$,
- si le nombre de cibles perdues ajouté au nombre de cibles mal localisées est inférieur à la consigne de qualité, par exemple diminuée de la valeur de tolérance prédéterminée, alors il convient de diminuer la fréquence de consigne du dispositif de suivi considéré, et éventuellement de revoir la répartition globale des ressources matérielles entre les n dispositifs de suivi $14_1$, ..., $14_i$, ..., $14_n$.

A titre d'exemple concret non limitatif, la révision de la répartition globale des ressources matérielles peut procéder de l'application des règles suivantes :

- les n dispositifs de suivi $14_1$, ..., $14_i$, ..., $14_n$ sont classés par niveaux de qualité : par exemple niveau 4 si le nombre de cibles perdues ajouté au nombre de cibles mal localisées est compris entre 0 et 4, niveau 3 si le nombre de cibles perdues ajouté au nombre de cibles mal localisées est compris entre 5 et 8, niveau 2 si le nombre de cibles perdues ajouté au nombre de cibles mal localisées est compris entre 9 et 12, niveau 1 si le nombre de cibles perdues ajouté au nombre de cibles mal localisées est strictement supérieur à 12,
- si deux dispositifs de suivi ont le même niveau de qualité, alors ils ont droit à une fréquence de fonctionnement aussi élevée l'un que l'autre,
- si un dispositif de suivi a un niveau de qualité inférieur à celui d'un autre, alors il a droit à une fréquence de fonctionnement plus élevée que l'autre, et
- si un dispositif de suivi a un niveau de qualité supérieur à celui d'un autre, alors il a droit à une fréquence de fonctionnement moins élevée que l'autre.

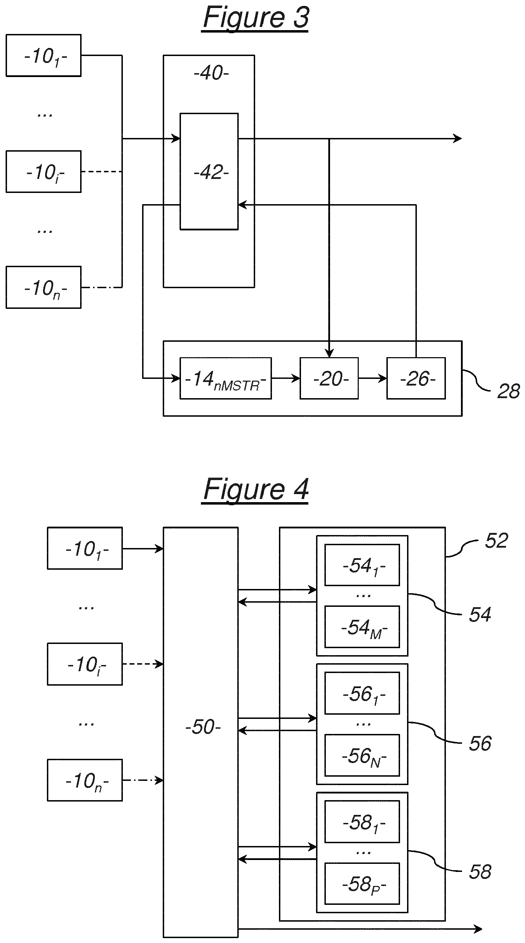

Un premier exemple d'implémentation simple du système de la figure 1 est illustré sur la figure 3. Cette architecture présente des composants dont la maîtrise et le coût rendent l'implémentation aisée.

Un serveur de suivi 40, formant par exemple un ordinateur classique avec un système d'exploitation tel que Linux (marque déposée) et une carte d'accès à un réseau, comporte un ensemble 42 de dispositifs de suivi mutualisés. Cet ensemble 42 reçoit les flux vidéo des n caméras vidéo $10_1$, ..., $10_i$, ..., $10_n$ qui peuvent prendre la forme de caméras IP (de l'anglais « Internet Protocol ») ou conformes au protocole Wi-Fi standard transmettant leurs flux vidéo par le réseau. Les dispositifs de suivi sont tout simplement des composants logiciels capables d'exécuter plusieurs algorithmes de détection et suivi de cible(s), par exemple implémentés en langage de programmation C++ ou Python (marque déposée) avec l'aide de la bibliothèque logicielle OpenCV (marque déposée).

La plateforme d'optimisation 28 est également implémentée dans un ordinateur classique avec accès au réseau. Le dispositif de suivi supplémentaire de référence $14_{MSTR}$, le calculateur de métriques 20 et le correcteur 26 qui la constituent sont eux aussi des composants logiciels par exemple implémentés en langage de programmation C++ ou Python (marque déposée) avec l'aide de la bibliothèque logicielle OpenCV (marque déposée). En particulier, le calculateur de métriques 20 et le correcteur 26 peuvent être programmés selon des algorithmes de l'état de la technique pour le calcul des métriques et des corrections basées des équations simples éprouvées sur des données de test pour la régulation. Dans cet exemple également, le dispositif de suivi supplémentaire de référence $14_{MSTR}$ reçoit les portions de flux vidéo de l'ensemble 42 de dispositifs de suivi mutualisés.

Un deuxième exemple d'implémentation plus complexe mais plus souple du système de la figure 1 est illustré sur la figure 4. Cette architecture permet une mutualisation et un découplage de tous ses composants, de manière à envisager une implémentation industrielle ayant la capacité de traiter un nombre de caméras vidéo très important. En particulier, l'effet d'échelle dans ce type d'architecture permet de produire une amélioration considérable du rendement du système en bénéficiant de la multiplication des gains par caméras vidéo et de l'utilisation d'unité de calculs peu chères et mutualisées pour l'optimisation par calculs de métriques et corrections.

Un premier composant 50, remplissant une fonction de répartiteur et bus de communication, reçoit les flux vidéo des n caméras vidéo $10_1$, ..., $10_i$, ..., $10_n$. Il peut s'agir d'un composant de type agent de message (de l'anglais « message broker ») tel que Apache ActiveMQ (marque déposée) ou WebSphere (marque déposée), ou encore un bus d'entreprise ESB (de l'anglais « Entreprise Service Bus ») tel que Blueway (marque déposée) ou Talend (marque déposée).

Un deuxième composant 52, connecté au premier composant 50, présente une architecture évolutive de type infrastructure à la demande IaaS (de l'anglais « Infrastructure as a Service »), permettant de s'adapter à la demande en ressources par allocation dynamique d'unités de calcul telles que des machines virtuelles. Ce deuxième composant 52 peut être implémenté en IaaS privé à base de composants VMware (marque déposée) ou en IaaS publique à base de services tels qu'Amazon EC2 (marque déposée). Il comporte un module de suivi 54 à M dispositifs de suivi $54_1$, ..., $54_M$, un module de suivi de référence 56 à N dispositifs de suivi supplémentaires de référence $56_1$, ..., $56_N$ et un module de régulation 58 à P régulateurs $58_1$, ..., $58_P$ comportant chacun un calculateur de métriques et un correcteur. Ces trois modules 54, 56 et 58 sont déployés sur machine virtuelle.

Les échanges de données entre les premier et deuxième composants 50 et 52 se font de la façon suivante :

- transmission des flux vidéo et des paramètres de configuration corrigés, du premier composant 50 vers le module de suivi 54 du deuxième composant 52,
- transmission des résultats de suivi vidéo, du module de suivi 54 du deuxième composant 52 vers le premier composant 50,
- transmission des portions de flux vidéo sélectionnées, du premier composant 50 vers le module de suivi de référence 56 du deuxième composant 52,
- transmission des résultats de suivi de référence sur les portions de flux vidéo sélectionnées, du module de suivi de référence 56 du deuxième composant 52 vers le premier composant 50,
- transmission des résultats de suivi vidéo et des résultats de suivi de référence, du premier composant 50 vers le module de régulation 58 du deuxième composant 52,
- échange des valeurs métriques entre régulateurs du module de régulation 58 du deuxième composant 52 en passant par le premier composant 50,
- transmission des paramètres de configuration corrigés, du module de régulation 58 du deuxième composant 52 vers le premier composant 50,
- transmission des résultats de suivi vidéo, du premier composant 50 vers un étage secondaire ou de sortie.

La répartition des tâches à l'intérieur de chacun des modules 54, 56 et 58 se fait de façon découplée selon la disponibilité et les ressources de leurs composants $54_1$, ..., $54_M$, $56_1$, ..., $56_N$ et $58_1$, ..., $58_P$.

Comme déjà évoqué, les systèmes illustrés sur les figures 1, 3 et 4 peuvent être mis en œuvre dans des dispositifs informatiques tels que des ordinateurs classiques comportant des processeurs associés à des mémoires pour le stockage de fichiers de données et de programmes d'ordinateurs. Les dispositifs de suivi et de régulation (par calcul de métrique, correction et configuration) peuvent être implémentés dans ces ordinateurs sous la forme de programmes d'ordinateurs ou de différentes fonctions d'un même programme d'ordinateur. Ces fonctions pourraient aussi être au moins en partie micro programmées ou micro câblées dans des circuits intégrés dédiés. Ainsi, en variante, les dispositifs informatiques mettant en œuvre les figures 1, 3 et 4 pourraient être remplacés par des dispositifs électroniques composés uniquement de circuits numériques (sans programme d'ordinateur) pour la réalisation des mêmes actions.

Il apparaît clairement qu'un système adaptatif de suivi automatique de cible dans au moins un flux vidéo tel que l'un de ceux décrits précédemment permet de réellement optimiser automatiquement ses traitements dans la limite de ses ressources et de détecter les situations à risque de façon nettement plus fiable. L'optimisation des ressources matérielles qui en résulte compense largement le surcoût engendré par l'ajout du ou des dispositif(s) de suivi de référence et des dispositifs de mesure de sollicitation des ressources matérielles.

Il devient en particulier possible de minimiser le taux d'occupation du matériel pour le système global incluant l'ensemble des dispositifs de suivi et de maximiser la qualité du suivi pour chacun d'eux : en effet la chaîne de régulation par calculs de métriques et corrections est avantageusement mise en œuvre régulièrement, par exemple périodiquement, pour chacun des dispositifs de suivi de l'étage primaire et permet d'en corriger le fonctionnement régulièrement suivant des objectifs fixés au système.

Le ou les dispositifs de suivi supplémentaires de référence n'est ou ne sont pas soumis à des contraintes de traitement en temps réel parce que la fréquence et la latence des boucles de régulation peuvent varier sans détérioration brusque des performances du système. Ainsi le chaque dispositif de suivi supplémentaire de référence peut être déployé sur des composants physiques partagés avec d'autres fonctionnalités du système, dans une architecture généralement moins onéreuse, ramenée au coût total par opération unitaire, que les architectures orientées temps réel.

Le coût global du système est fonction de la complexité des scènes, et de la qualité demandée aux dispositifs de suivi. Pour une qualité de suivi fixée le raisonnement suivant montre que la présente invention diminue la dépense du système. Un raisonnement analogue peut être mené selon lequel, pour une dépense donnée, la présente invention, améliore la qualité du suivi.

Notons :

- $ct_{regulation-pour-i}$ la quantité de ressources matérielles utilisées pour la régulation (calculs de métriques et correction) du dispositif de suivi $14_i$,
- $ct_{suivi-tracker-maitre-i}$, $ct_{caclul-des-métriques-i}$, $ct_{correcteur-i}$ la quantité de ressources matérielles utilisées pour l'évaluation par le dispositif de suivi supplémentaire de référence $14_{MSTR}$ des portions de flux vidéo de la caméra $10_i$, de l'évaluation de consommation en ressource du dispositif de suivi $14_i$, du calcul de correction à appliquer au dispositif de suivi $14_i$,
- $ct_{unitaire-tracker-moy}$ la quantité de ressources matérielles moyenne demandées par un dispositif de suivi (moyenne calculée sur l'ensemble des dispositifs de suivi $14_1$ à $14_n$),
- $ct_{unitaire-tracker-maitre-moy}$ la quantité de ressources matérielles demandées pour l'évaluation par le dispositif de suivi supplémentaire de référence $14_{MSTR}$ des portions de flux vidéo d'une caméra en moyenne sur une période et sur l'ensemble des dispositifs de suivi,
- $ct_{unitaire-tracker-moy-optimisé}$ la quantité de ressources matérielles moyenne demandées par un dispositif de suivi lorsque la régulation décrite précédemment est utilisée (moyenne calculée sur l'ensemble des dispositifs de suivi $14_1$ à $14_n$).

Lorsque le système bénéficie des premier et deuxième aspects de la présente invention :

$$ct_{\acute{e}tage-trackers-primaires-optimis\acute{e}} = \sum_{i=1}^{n} \left( ct_{unitaire-tracker-i} + ct_{regulation-pour-i} \right)$$

et

$$ct_{regulation-pour-i} = ct_{suivi-tracker-maitre-i} + ct_{caclul-des-m\acute{e}triques-i} + ct_{correcteur-i}$$

Pour une implémentation simple de la régulation :

$$ct_{regulation-pour-i} \approx ct_{suivi-tracker-maitre-i}$$

$$ct_{\acute{e}tage-trackers-primaires-optimis\acute{e}} = \sum_{i=1}^{n} (ct_{unitaire-tracker-i} + ct_{suivi-tracker-maitre-i})$$

$$ct_{\text{étage-trackers-primaires-optimisé}}$$
$$= n \times (ct_{unitaire-tracker-moy-optimisé} + ct_{unitaire-tracker-maitre-moy})$$

Lorsque le système ne bénéficie pas des premier et deuxième aspects de la présente invention :

$$ct_{\text{étage-trackers-primaires}} = n \times ct_{unitaire-tracker-moy}$$

D'où un gain G :

$$G = ct_{\text{étage-trackers-primaires}} - ct_{\text{étage-trackers-primaires-optimisé}}$$

$$gain = n \times \big(ct_{unitaire-tracker-moy} - ct_{unitaire-tracker-moy-optimisé}$$
$$- ct_{unitaire-tracker-maitre-moy}\big)$$

La présente invention apporte donc un gain de performance lorsque l'optimisation moyenne pour un dispositif de suivi apportée par la régulation est supérieure aux dépenses moyennes induites par le dispositif de suivi supplémentaire de référence pour un dispositif de suivi :

$$ct_{unitaire-tracker-moy} - ct_{unitaire-tracker-moy-optimisé} > ct_{unitaire-tracker-maitre-moy}$$

On notera par ailleurs que l'invention n'est pas limitée aux modes de réalisation décrits précédemment.
Il apparaîtra plus généralement à l'homme de l'art que diverses modifications peuvent être apportées aux modes de réalisation décrits ci-dessus, à la lumière de l'enseignement qui vient de lui être divulgué.

## Revendications

1. Système adaptatif de suivi automatique de cible dans au moins un flux vidéo, comportant :

   - au moins un dispositif de suivi ($14_1$, ..., $14_n$), recevant ledit au moins un flux vidéo et configurable dynamiquement, conçu pour la détection et le suivi automatique d'au moins une cible par analyse dudit au moins un flux vidéo,
   - un calculateur (20) d'au moins une valeur métrique de performance à partir d'un résultat de suivi de cible ($R_1$, ..., $R_n$) fourni par ledit au moins un dispositif de suivi ($14_1$, ..., $14_n$),
   - un correcteur (26) d'au moins un paramètre de configuration dudit au moins un dispositif de suivi ($14_1$, ..., $14_n$) en fonction de ladite au moins une valeur métrique de performance, et
   - au moins un configurateur dynamique ($16_1$, ..., $16_n$) dudit au moins un dispositif de suivi ($14_1$, ..., $14_n$) par application dudit au moins un paramètre de configuration corrigé,

   **caractérisé en ce qu'**il comporte en outre au moins un dispositif de suivi supplémentaire de référence ($14_{MSTR}$) se distinguant dudit au moins un dispositif de suivi ($14_1$, ..., $14_n$) par des ressources matérielles plus performantes, recevant une portion ($P_1$, ..., $P_n$) dudit au moins un flux vidéo, et **en ce que** le calculateur (20) est plus précisément conçu pour calculer ladite au moins une valeur métrique de performance à partir d'une comparaison, sur cette portion de flux vidéo, du résultat de suivi de cible ($R_1$, ..., $R_n$) fourni par ledit au moins un dispositif de suivi ($14_1$, ..., $14_n$) et d'un résultat de suivi de référence ($S_1$, ..., $S_n$) fourni par ledit au moins un dispositif de suivi supplémentaire de référence ($14_{MSTR}$) grâce à ses ressources matérielles plus performantes.

2. Système adaptatif de suivi automatique de cible selon la revendication 1, comportant en outre au moins un dispositif de capture vidéo ($10_1$, ..., $10_n$), relié en transmission de données audit au moins un dispositif de suivi ($14_1$, ..., $14_n$) et audit au moins un dispositif de suivi supplémentaire de référence ($14_{MSTR}$), pour la fourniture respective dudit au moins un flux vidéo et de ladite portion ($P_1$, ..., $P_n$) dudit au moins un flux vidéo.

3. Système adaptatif de suivi automatique de cible selon la revendication 1 ou 2, dans lequel chaque dispositif de suivi ($14_1$, ..., $14_n$) est configurable à l'aide d'au moins l'un des paramètres de configuration de l'ensemble constitué de :

   - un nombre d'images à traiter ou exploiter par seconde dans ledit au moins un flux vidéo,
   - une résolution d'images, et
   - un nombre maximal de cibles à détecter et suivre dans ledit au moins un flux vidéo.

4. Système adaptatif de suivi automatique de cible selon l'une quelconque des revendications 1 à 3, dans lequel le calculateur (20) est plus précisément conçu pour calculer ladite au moins une valeur métrique de performance sur la base d'un nombre de cibles non identifiées ou perdues pour chaque dispositif de suivi ($14_1$, ..., $14_n$), ce nombre étant calculé à partir de la comparaison, sur ladite portion de flux vidéo, du résultat de suivi de cible ($R_1$, ..., $R_n$) fourni par ledit au moins un dispositif de suivi ($14_1$, ..., $14_n$) et du résultat de suivi de référence ($S_1$, ..., $S_n$) fourni par ledit au moins un dispositif de suivi supplémentaire de référence ($14_{MSTR}$).

5. Système adaptatif de suivi automatique de cible selon l'une quelconque des revendications 1 à 4, dans lequel le calculateur (20) est plus précisément conçu pour calculer ladite au moins une valeur métrique de performance sur la base d'un nombre de cibles interchangées ou mal localisées pour chaque dispositif de suivi ($14_1$, ..., $14_n$), ce nombre étant calculé à partir de la comparaison, sur ladite portion de flux vidéo, du résultat de suivi de cible ($R_1$, ..., $R_n$) fourni par ledit au moins un dispositif de suivi ($14_1$, ..., $14_n$) et du résultat de suivi de référence ($S_1$, ..., $S_n$) fourni par ledit au moins un dispositif de suivi supplémentaire de référence ($14_{MSTR}$).

6. Système adaptatif de suivi automatique de cible selon les revendications 4 et 5, dans lequel le correcteur (26) est conçu pour procéder à une régulation d'une fréquence de consigne dudit au moins un dispositif de suivi ($14_1$, ..., $14_n$), cette fréquence de consigne étant relative à un nombre d'images à traiter ou exploiter par seconde, par application au moins des règles suivantes :

   - si le nombre de cibles non identifiées ou perdues ajouté au nombre de cibles interchangées ou mal localisées est supérieur à une consigne de qualité prédéterminée, par exemple augmentée d'une valeur de tolérance prédéterminée, alors on augmente la fréquence de consigne dudit au moins un dispositif de suivi ($14_1$, ..., $14_n$), et
   - si le nombre de cibles non identifiées ou perdues ajouté au nombre de cibles interchangées ou mal localisées est inférieur à la consigne de qualité prédéterminée, par exemple diminuée de la valeur de tolérance prédéterminée, alors on diminue la fréquence de consigne dudit au moins un dispositif de suivi ($14_1$, ..., $14_n$).

7. Système adaptatif de suivi automatique de cible selon l'une quelconque des revendications 1 à 6, comportant plusieurs dispositifs de suivi ($14_1$, ..., $14_n$), recevant simultanément respectivement plusieurs flux vidéo.

8. Système adaptatif de suivi automatique de cible selon l'une quelconque des revendications 1 à 7, dans lequel chaque dispositif de suivi ($14_1$, ..., $14_n$) est conçu pour la détection et le suivi automatique simultané de plusieurs cibles par analyse du flux vidéo qu'il reçoit.

9. Procédé adaptatif de suivi automatique de cible dans au moins un flux vidéo, mise en œuvre par ordinateur et comportant les étapes suivantes :

   - analyse (102) dudit au moins un flux vidéo, à l'aide d'au moins un dispositif de suivi ($14_1$, ..., $14_n$), configurable dynamiquement, conçu pour la détection et le suivi automatique d'au moins une cible dans ledit au moins un flux vidéo,
   - calcul (106) d'au moins une valeur métrique de performance à partir d'un résultat de suivi de cible ($R_1$, ..., $R_n$) fourni par ledit au moins un dispositif de suivi ($14_1$, ..., $14_n$),
   - correction (112) d'au moins un paramètre de configuration dudit au moins un dispositif de suivi ($14_1$, ..., $14_n$) en fonction de ladite au moins une valeur métrique de performance, et
   - configuration dynamique (114) dudit au moins un dispositif de suivi ($14_1$, ..., $14_n$) par application dudit au moins un paramètre de configuration corrigé,

   **caractérisé en ce qu'**il comporte en outre la fourniture (100) d'une portion ($P_1$, ..., $P_n$) dudit au moins un flux vidéo à au moins un dispositif de suivi supplémentaire de référence ($14_{MSTR}$) se distinguant dudit au moins un dispositif de suivi ($14_1$, ..., $14_n$) par des ressources matérielles plus performantes, et **en ce que** le calcul (106) de ladite au moins une valeur métrique de performance est plus précisément réalisé à partir d'une comparaison, sur cette portion ($P_1$, ..., $P_n$) de flux vidéo, du résultat de suivi de cible ($R_1$, ..., $R_n$) fourni par ledit au moins un dispositif de suivi ($14_1$,

..., $14_n$) et d'un résultat de suivi de référence ($S_1$, ..., $S_n$) fourni par ledit au moins un dispositif de suivi supplémentaire de référence ($14_{MSTR}$) grâce à ses ressources matérielles plus performantes.

10. Programme d'ordinateur comprenant des instructions qui conduisent celui-ci à mettre en oeuvre les étapes d'un procédé adaptatif de suivi automatique de cible dans au moins un flux vidéo selon la revendication 9, lorsque ledit programme est exécuté sur un ordinateur.


**Patentansprüche**

1. Adaptives System zur automatischen Verfolgung eines Zielobjekts in mindestens einem Videostrom, umfassend:

   - mindestens eine Verfolgungsvorrichtung ($14_1$, ..., $14_n$), die den mindestens einen Videostrom empfängt und dynamisch konfigurierbar ist, die zur Erfassung und zur automatischen Verfolgung mindestens eines Zielobjekts durch die Analyse des mindestens einen Videostroms ausgelegt ist,
   - eine Rechenvorrichtung (20) zum Berechnen mindestens einer Leistungsmetrik aus einem Zielobjektverfolgungsergebnis ($R_1$, ..., $R_n$), das von der mindestens einen Verfolgungsvorrichtung ($14_1$, ..., $14_n$) bereitgestellt wird,
   - eine Vorrichtung zum Korrigieren (26) mindestens eines Konfigurationsparameters der mindestens einen Verfolgungsvorrichtung ($14_1$, ..., $14_n$) in Abhängigkeit von der mindestens einen Leistungsmetrik, und
   - mindestens eine Vorrichtung zum dynamischen Konfigurieren ($16_1$, ..., $16_n$) der mindestens einen Verfolgungsvorrichtung ($14_1$, ..., $14_n$) unter Verwendung des mindestens einen korrigierten Konfigurationsparameters,

   **dadurch gekennzeichnet, dass** es ferner mindestens eine zusätzliche Referenzverfolgungsvorrichtung ($14_{MSTR}$) umfasst, die sich von der mindestens einen Verfolgungsvorrichtung ($14_1$, ..., $14_n$) durch leistungsstärkere Hardware-Ressourcen unterscheidet, die einen Teil ($P_1$, ..., $P_n$) des mindestens einen Videostroms empfangen, und dass die Rechenvorrichtung (20) genauer gesagt ausgelegt ist, um die mindestens eine Leistungsmetrik aus einem Vergleich, in diesem Teil des Videostroms, des Zielobjektverfolgungsergebnisses ($R_1$, ..., $R_n$), das von der mindestens einen Verfolgungsvorrichtung ($14_1$, ..., $14_n$) bereitgestellt wird, und eines Referenzverfolgungsergebnisses ($S_1$, ..., $S_n$), das von der mindestens einen zusätzlichen Referenzverfolgungsvorrichtung ($14_{MSTR}$) bereitgestellt wird, dank seiner leistungsstärkeren Hardware-Ressourcen zu berechnen.

2. Adaptives System zur automatischen Verfolgung eines Zielobjekts nach Anspruch 1, ferner umfassend mindestens eine Videoaufnahmevorrichtung ($10_1$, ..., $10_n$), die zur Datenübertragung mit der mindestens einen Verfolgungsvorrichtung ($14_1$, ..., $14_n$) und mit der mindestens einen zusätzlichen Referenzverfolgungsvorrichtung ($14_{MSTR}$) verbunden ist, um jeweils den mindestens einen Videostrom und den Teil ($P_1$, ..., $P_n$) des mindestens einen Videostroms bereitzustellen.

3. Adaptives System zur automatischen Verfolgung eines Zielobjekts nach Anspruch 1 oder 2, wobei jede Verfolgungsvorrichtung ($14_1$, ..., $14_n$) konfigurierbar ist anhand mindestens eines der Konfigurationsparameter der Menge bestehend aus:

   - einer Anzahl von Bildern, die in dem mindestens einen Videostrom pro Sekunde zu verarbeiten oder zu nutzen sind,
   - einer Bildauflösung, und
   - einer maximalen Anzahl von Zielobjekten, die in dem mindestens einen Videostrom zu erfassen und zu verfolgen sind.

4. Adaptives System zur automatischen Verfolgung eines Zielobjekts nach einem der Ansprüche 1 bis 3, wobei die Rechenvorrichtung (20) genauer gesagt ausgelegt ist, um die mindestens eine Leistungsmetrik auf der Grundlage einer Anzahl von nicht identifizierten oder verlorenen Zielobjekten für jede Verfolgungsvorrichtung ($14_1$, ..., $14_n$) zu berechnen, wobei diese Anzahl aus dem Vergleich, in dem Teil des Videostroms, des Zielobjektverfolgungsergebnisses ($R_1$, ..., $R_n$), das von der mindestens einen Verfolgungsvorrichtung ($14_1$, ..., $14_n$) bereitgestellt wird, und des Referenzverfolgungsergebnisses ($S_1$, ..., $S_n$), das von der mindestens einen zusätzlichen Referenzverfolgungsvorrichtung ($14_{MSTR}$) bereitgestellt wird, berechnet wird.

5. Adaptives System zur automatischen Verfolgung eines Zielobjekts nach einem der Ansprüche 1 bis 4, wobei die Rechenvorrichtung (20) genauer gesagt ausgelegt ist, um die mindestens eine Leistungsmetrik auf der Grundlage einer Anzahl von vertauschten oder falsch lokalisierten Zielobjekten für jede Verfolgungsvorrichtung ($14_1$, ..., $14_n$) zu berechnen, wobei diese Anzahl aus dem Vergleich, in dem Teil des Videostroms, des Zielobjektverfolgungsergebnisses ($R_1$, ..., $R_n$), das von der mindestens einen Verfolgungsvorrichtung ($14_1$, ..., $14_n$) bereitgestellt wird, und des Referenzverfolgungsergebnisses ($S_1$, ..., $S_n$), das von der mindestens einen zusätzlichen Referenzverfolgungsvorrichtung ($14_{MSTR}$) bereitgestellt wird, berechnet wird.

6. Adaptives System zur automatischen Verfolgung eines Zielobjekts nach Anspruch 4 und 5, wobei die Korrekturvorrichtung (26) ausgelegt ist, um eine Regulierung einer Sollfrequenz der mindestens einen Verfolgungsvorrichtung ($14_1$, ..., $14_n$), wobei sich diese Sollfrequenz auf eine Anzahl von Bildern bezieht, die pro Sekunde zu verarbeiten oder nutzen sind, unter Verwendung mindestens der folgenden Regeln vorzunehmen:

- wenn die Anzahl von nicht identifizierten oder verlorenen Zielobjekten, zusätzlich zu der Anzahl von vertauschten oder falsch lokalisierten Zielobjekten, größer als ein vorbestimmter Qualitätssollwert ist, beispielsweise um einen vorbestimmten Toleranzwert erhöht ist, dann wird die Sollfrequenz der mindestens einen Verfolgungsvorrichtung ($14_1$, ..., $14_n$) erhöht, und
- wenn die Anzahl von nicht identifizierten oder verlorenen Zielobjekten, zusätzlich zu der Anzahl von vertauschten oder falsch lokalisierten Zielobjekten, kleiner als ein vorbestimmter Qualitätssollwert ist, beispielsweise um den vorbestimmten Toleranzwert verringert ist, wird die Sollfrequenz der mindestens einen Verfolgungsvorrichtung ($14_1$, ..., $14_n$) verringert.

7. Adaptives System zur automatischen Verfolgung eines Zielobjekts nach einem der Ansprüche 1 bis 6, umfassend mehrere Verfolgungsvorrichtungen ($14_1$, ..., $14_n$), die gleichzeitig jeweils mehrere Videoströme empfangen.

8. Adaptives System zur automatischen Verfolgung eines Zielobjekts nach einem der Ansprüche 1 bis 7, wobei jede Verfolgungsvorrichtung ($14_1$, ..., $14_n$) für die Erfassung und die gleichzeitige automatische Verfolgung mehrerer Zielobjekte durch die Analyse des Videostroms, den sie empfängt, ausgelegt ist.

9. Adaptives Verfahren zur automatischen Verfolgung eines Zielobjekts in mindestens einem Videostrom, das von einem Computer umgesetzt wird und folgende Schritte umfasst:

- Analysieren (102) des mindestens einen Videostroms anhand mindestens einer Verfolgungsvorrichtung ($14_1$, ..., $14_n$), die dynamisch konfigurierbar ist, die zur Erfassung und zur automatischen Verfolgung mindestens eines Zielobjekts in dem mindestens einen Videostrom ausgelegt ist,
- Berechnen (106) mindestens einer Leistungsmetrik aus einem Zielobjektverfolgungsergebnis ($R_1$, ..., $R_n$), das von der mindestens einen Verfolgungsvorrichtung ($14_1$, ..., $14_n$) bereitgestellt wird,
- Korrigieren (112) mindestens eines Konfigurationsparameters der mindestens einen Verfolgungsvorrichtung ($14_1$, ..., $14_n$) in Abhängigkeit von der mindestens einen Leistungsmetrik, und
- dynamisches Konfigurieren (114) der mindestens einen Verfolgungsvorrichtung ($14_1$, ..., $14_n$) unter Verwendung des mindestens einen korrigierten Konfigurationsparameters,

**dadurch gekennzeichnet, dass** es ferner das Bereitstellen (100) eines Teils ($P_1$, ..., $P_n$) des mindestens einen Videostroms für mindestens eine zusätzliche Referenzverfolgungsvorrichtung ($14_{MSTR}$) umfasst, die sich von der mindestens einen Verfolgungsvorrichtung ($14_1$, ..., $14_n$) durch leistungsstärkere Hardware-Ressourcen unterscheidet, und dass die Berechnung (106) der mindestens einen Leistungsmetrik genauer gesagt ausgehend von einem Vergleich, in diesem Teil ($P_1$, ..., $P_n$) des Videostroms, des Zielobjektverfolgungsergebnisses ($R_1$, ..., $R_n$), das von der mindestens einen Verfolgungsvorrichtung ($14_1$, ..., $14_n$) bereitgestellt wird, und eines Referenzverfolgungsergebnisses ($S_1$, ..., $S_n$), das von der mindestens einen zusätzlichen Referenzverfolgungsvorrichtung ($14_{MSTR}$) bereitgestellt wird, dank ihrer leistungsstärkeren Hardware-Ressourcen erfolgt.

10. Computerprogramm, umfassend Anweisungen, die veranlassen, dass es die Schritte eines adaptiven Verfahrens zur automatischen Verfolgung eines Zielobjekts in mindestens einem Videostrom nach Anspruch 9 umsetzt, wenn das Programm auf einem Computer ausgeführt wird.

**Claims**

1. An adaptive system for automatic tracking of a target in at least one video stream, comprising:

- at least one dynamically configurable tracking device ($14_1$, ..., $14_n$), receiving said at least one video stream, adapted for detection and automatic tracking of at least one target by analysis of said at least one video stream,
- a calculator (20) to determine at least one metric performance value from a target tracking result ($R_1$, ..., $R_n$) provided by said at least one tracking device ($14_1$, ..., $14_n$),
- a corrector (26) of at least one configuration parameter of said least one tracking device ($14_1$, ..., $14_n$) as a function of said at least one metric performance value, and
- at least one dynamic configurator ($16_1$, ..., $16_n$) of said at least one tracking device ($14_1$, ..., $14_n$) by application of said at least one corrected configuration parameter,

**characterized in that** it further comprises at least one supplementary reference tracking device ($14_{MSTR}$) differing from the at least one tracking device ($14_1$, ..., $14_n$) by higher performance hardware resources, receiving at least one portion ($P_1$, ..., $P_n$) of said at least one video stream, and **in that** the calculator (20) is more specifically adapted to calculate said at least one metric performance value based on a comparison on said at least one video stream portion, of the target tracking result ($R_1$, ..., $R_n$) supplied by said at least one tracking device ($14_1$, ..., $14_n$) and a reference tracking result ($S_1$, ..., $S_n$) supplied by said at least one supplementary reference tracking device ($14_{MSTR}$) thanks to its higher performance hardware resources.

2. The adaptive automatic target tracking system according to claim 1, further comprising at least one video capture device ($10_1$, ..., $10_n$) connected in data transmission to said at least one tracking device ($14_1$, ..., $14_n$) and to said at least one supplementary reference tracking device ($14_{MSTR}$), for the respective supply of said at least one video stream and said at least one portion ($P_1$, ..., $P_n$) of said at least one video stream.

3. The adaptive automatic target tracking system according to claim 1 or 2, wherein each tracking device is configurable ($14_1$, ..., $14_n$) using at least one of the configuration parameters of the set composed of:

   - a number of images to be processed or interpreted per second in said at least one video stream,
   - an image resolution, and
   - a maximum number of targets to be detected and tracked in said at least one video stream.

4. The adaptive automatic target tracking system according to any one of claims 1 to 3, wherein the calculator (20) is more specifically adapted to calculate said at least one metric performance value based on a number of unidentified or lost targets for each tracking device ($14_1$, ..., $14_n$), the number being calculated from the comparison, on said at least one video stream portion, of the target tracking result ($R_1$, ..., $R_n$) supplied by said at least one tracking device ($14_1$, ..., $14_n$) and the reference tracking result ($S_i$, ..., $S_n$) supplied by said at least one supplementary reference tracking device ($14_{MSTR}$).

5. The adaptive automatic target tracking system according to any one of claims 1 to 4, wherein the calculator (20) is more specifically adapted to calculate said at least one metric performance value based on a number of interchanged or badly localized targets for each tracking device ($14_1$, ..., $14_n$), the number being calculated from the comparison, on said at least one video stream portion, of the target tracking result ($R_1$, ..., $R_n$) supplied by said at least one tracking device ($14_1$, ..., $14_n$) and the reference tracking result ($S_1$, ..., $S_n$) supplied by said at least one supplementary reference tracking device ($14_{MSTR}$).

6. The adaptive automatic target tracking system according to claims 4 and 5, wherein the corrector (26) is adapted to regulate a set frequency of said at least one tracking device ($14_1$, ..., $14_n$), said set frequency being relative to a number of images to be processed per second, by applying at least the following rules:

   - if the number of unidentified or lost targets added to the number of interchanged or badly localized targets is higher than a predetermined set quality, for example increased by a predetermined tolerance value, then the set frequency of said at least one tracking device ($14_1$, ..., $14_n$) is increased, and
   - if the number of unidentified or lost targets added to the number of interchanged or badly localized targets is lower than the predetermined set quality, for example reduced by the predetermined tolerance value, then the set frequency of said at least one tracking device is reduced ($14_1$, ..., $14_n$).

7. The adaptive automatic target tracking system according to any one of claims 1 to 6, comprising several tracking devices ($14_1$, ..., $14_n$), simultaneously receiving respectively several video streams.

8. The adaptive automatic target tracking system according to any one of claims 1 to 7, wherein each tracking device

**EP 3 506 202 B1**

$(14_1, ..., 14_n)$ is adapted for detection and simultaneous automatic tracking of several targets by analysis of the video stream that it receives.

9. A computer implement adaptive method for automatic tracking of a target in at least one video stream, comprising the following steps:

- analyze (102) said at least one video stream using at least one dynamically configurable tracking device $(14_1, ..., 14_n)$ adapted for detection and automatic tracking of at least one target in said at least one video stream,
- calculate (106) at least one metric performance value from a target tracking result $(R_1, ..., R_n)$ provided by said at least one tracking device $(14_1, ..., 14_n)$,
- correct (112) at least one configuration parameter of said least one tracking device $(14_1, ..., 14_n)$ as a function of said at least one metric performance value, and
- dynamic configuration (114) of said at least one tracking device $(14_1, ..., 14_n)$ by application of said at least one corrected configuration parameter,

**characterized in that** it also comprises supplying (100) of at least one portion $(P_1, ..., P_n)$ of said at least one video stream to at least one supplementary reference tracking device $(14_{MSTR})$ differing from the at least one tracking device $(14_1, ..., 14_n)$ by higher performance hardware resources, and **in that** the calculation (106) of said at least one metric performance value is more specifically based on a comparison, on said at least one video stream portion $(P_1, ..., P_n)$, of the target tracking result $(R_1, ..., R_n)$ supplied by said at least one tracking device $(14_1, ..., 14_n)$ and a reference tracking result $(S_i, ..., S_n)$ supplied by said at least one supplementary reference tracking device $(14_{MSTR})$ thanks to its higher performance hardware resources.

10. A computer program comprising instructions carrying out the steps of a an adaptive method for automatic tracking of a target in at least one video stream according to claim 9, when said program is run on a computer.

**14**

## Figure 1

## Figure 2

## Figure 3

## Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D'IGUAL et al.** Adaptive tracking algorithms to improve the use of computing resources. *IET Computer Vison,* 2013, vol. 7 (6), 415-424